Europäisches Patentamt

European Patent Office

Office européen des brevets

(19)

(11) Veröffentlichungsnummer : **0 025 525**
**B1**

(12) **EUROPÄISCHE PATENTSCHRIFT**

(45) Veröffentlichungstag der Patentschrift :
16.11.83

(51) Int. Cl.³ : **G 01 F 23/24**

(21) Anmeldenummer : 80104995.8

(22) Anmeldetag : 22.08.80

(54) **Flüssigkeitsstand-Messeinrichtung.**

(30) Priorität : 13.09.79 DE 2937042

(43) Veröffentlichungstag der Anmeldung :
25.03.81 Patentblatt 81/12

(45) Bekanntmachung des Hinweises auf die Patenterteilung : 16.11.83 Patentblatt 83/46

(84) Benannte Vertragsstaaten :
**DE FR GB SE**

(56) Entgegenhaltungen :
**DE A 2 152 675**
**DE B 1 243 892**
**FR A 2 067 448**
**US A 2 735 301**
**US A 3 911 744**
**US A 4 122 429**

(73) Patentinhaber : **VDO Adolf Schindling AG**
**Gräfstrasse 103**
**D-6000 Frankfurt/Main (DE)**

(72) Erfinder : **Baumgart, Hans Jürgen**
**Marktplatz 6**
**D-6231 Schwalbach/Ts. (DE)**
Erfinder : **Albrecht, Klaus**
**Brunnenstrasse 16**
**D-6237 Liederbach (DE)**
Erfinder : **Haub, Martin**
**Berliner Strasse 16**
**D-6374 Steinbach/Ts. (DE)**

(74) Vertreter : **Könekamp, Herbert, Dipl.-Ing.**
**Sodener Strasse 9**
**D-6231 Schwalbach (DE)**

Flüssigkeitsstand-Messeinrichtung

Die Erfindung bezieht sich auf eine Einrichtung zum Messen des Flüssigkeitsstandes in einem Behälter, nach dem Oberbegriff des Anspruches 1.

Eine solche Einrichtung ist aus der US-A-2 735 301 bekannt.

Bei der bekannten Einrichtung dienen die Geberelemente der ersten Gruppe einer groben Messung des Flüssigkeitsstandes, während mit den Geberelementen der zweiten Gruppe eine Feinmessung erfolgt. Jedes Geberelement der zweiten Gruppe ist einem Geberelement der ersten Gruppe zugeordnet, wobei jeweils beide Geberelemente einem bestimmten Füllhöhenmeßbereich zugeordnet sind. Diese Einrichtung hat den Nachteil, daß zwei getrennte Zeigeranzeigeinstrumente benötigt werden und zwar eines zur Anzeige der Grobmeßwerte und eines zur Anzeige der Feinmeßwerte. Ferner muß das Zeigerinstrument für die Feinmeßwerte über einen manuell zu betätigenden Mehrfachschalter jeweils auf das austauchende Geberelement geschaltet werden. Infolgedessen eignet sich eine solche Einrichtung insbesondere nicht zur Flüssigkeitsstandsmessung von Kraftstoffbehältern.

Es ist des weiteren eine Einrichtung bekannt (DE-A-21 12 220), bei der das Anzeigeinstrument aus einer Anzahl von Anzeigeelementen besteht, die in der gleichen Reihenfolge angeordnet sind wie die als Widerstandselement ausgebildeten Geberelemente in dem Behälter, in dem der Flüssigkeitsstand gemessen werden soll. Damit bilden die Anzeigeelemente im Betrieb ein leuchtendes Band, dessen Länge dem jeweiligen Flüssigkeitsstand entspricht.

Eine solche Einrichtung hat den Nachteil, daß die Summe der anzuzeigenden diskreten Meßwerte die Gesamthöhe der übereinander angeordneten Anzeigeelemente bestimmt. Durch die Abmessung der übereinander angeordneten Anzeigeelemente ist somit eine Begrenzung der Auflösung der Messung gegeben.

Um den Einfluß der Umgebungstemperatur und der Stoffeigenschaften der Flüssigkeit, deren Höhe gemessen werden soll, auf die Messung auszugleichen, ist es bei vorgenannten Einrichtungen auch bekannt, Kompensationsschaltungen und insbesondere bei kapazitiven Geberelementen wenigstens eine Bezugselektrode vorzusehen, die ständig in die Flüssigkeit eingetaucht ist.

Es ist des weiteren eine Einrichtung zum Messen der Wassertiefe bekannt (US-A-4 122 429), die ein aus einzelnen Anzeigeelementen bestehendes Anzeigeband aufweist, dem einerseits eine Festskala zugeordnet ist, und andererseits eine manuell drehbare Walze mit unterschiedlichen Skalen. Ferner ist ein manuell betätigbarer Umschalter vorhanden, mit dem das Anzeigeband von dem Festskala-Meßbereich auf Walzen-Meßbereiche umgeschaltet werden kann. Auch diese Einrichtung eignet sich nicht für eine Tankfüllstandsanzeige im Kraftfahrzeug.

Aus der US-A-3 911 744 ist es bekannt, bei einer Flüssigkeitsstandsmeßeinrichtung einen sich an das untere Ende eines Füllhöhenmeßbereichs (32) anschließenden weiteren Füllhöhenmeßbereich (34) vorzusehen.

Die genannten Nachteile der bekannten Einrichtungen sollen durch die Erfindung überwunden werden. Es ist daher Aufgabe der Erfindung, eine Einrichtung der eingangs genannten Gattung für die Verwendung in Kraftstoffbehältern von Kraftfahrzeugen so auszubilden, daß sie eine hohe Auflösung in einem Teilbereich des gesamten Meßbereichs bei einer vorgegebenen Gesamthöhe der Anzeige ermöglicht.

Diese Aufgabe wird für eine Einrichtung zum Messen des Flüssigkeitsstandes der eingangs genannten Gattung durch die in dem kennzeichnenden Teil des Anspruchs 1 angegebenen Merkmale gelöst.

Bei einer vorgegebenen Länge der übereinander angeordneten Anzeigeelemente kann die Messung in einem ersten Meßbereich, der verhältnismäßig groß ist, mit einer normalen Auflösung erfolgen und in einem zweiten, kleineren Meßbereich mit erhöhter Auflösung mit den gleichen Anzeigeelementen wie in dem ersten Meßbereich. Damit wird eine besonders geschickte Ausnutzung der Anzeigestufen erreicht. Die Flüssigkeitsstands-Meßeinrichtung ist also hinsichtlich der verwendeten Anzahl von Anzeigeelementen im Hinblick auf den gesamten erfaßten Meßbereich und die in einem Teilbereich erzielte Auflösung wenig aufwendig. Der Anzeigeteil dieser Flüssigkeitsstands-Meßeinrichtung läßt sich durch die begrenzte Anzahl Anzeigeelemente ohne weiteres kompakt aufbauen.

Vorteilhafterweise ist die Flüssigkeitsstands-Meßeinrichtung mit dem Merkmal des Anspruchs 2 weitergebildet.

Durch zusätzliche Anzeigeelemente kann dem Beobachter sinnfällig angezeigt werden, in welchem Meßbereich die aktuelle Anzeige erfolgt. Irrtümer über den Meßbereich sind so weitgehend ausgeschlossen, auch wenn der Beobachter nicht die vorhergehenden Messungen bzw. die Tendenz der Füllstandsveränderung im Gedächtnis hat.

Im einzelnen kann die letztgenannte weitergebildete Einrichtung mit dem Merkmal ausgebildet sein, daß die zusätzlichen Anzeigeelemente aus zwei unterschiedlich farbigen Lampen bestehen, von denen je eine zur Anzeige des wirksamen Meßbereichs einschaltbar ist.

Je nach dem aktuellen Meßbereich kann so beispielsweise eine grüne Lampe für den ersten Meßbereich oder eine rote Lampe für einen zweiten, kleineren und besser aufgelösten Meßbereich aufleuchten.

In einer anderen Variante der weitergebildeten Einrichtung ist vorteilhafterweise vorgesehen, daß den Anzeigeelementen zwei Skalen zugeordnet sind, die entsprechend dem ersten bzw. dem zweiten Meßbereich geeicht sind, und daß je eine Skala durch die Umschalteinrichtung, je nach dem vorliegenden Meßbereich, wirksam geschaltet ist.

Bei dieser Weiterbildung sind Irrtümer durch den Beobachter weitgehend ausgeschlossen, da er die Anzeigeelemente zwangsläufig nur in Verbindung mit der jeweils zutreffenden Skala beobachten kann.

Hinsichtlich der Anordnung der Geberelemente in der Flüssigkeitsstands-Meßeinrichtung mit einem ersten normalen Meßbereich und einem zweiten, kleineren, besser aufgelösten Meßbereich ist das kennzeichnende Merkmal des Anspruchs 5 vorgesehen.

Die vorliegende Erfindung eignet sich für eine Vielzahl von Geberelementen, deren elektrischer Widerstandswert in Abhängigkeit davon verändert wird, ob das Widerstandselemente in die Flüssigkeit eingetaucht ist oder nicht. Speziell können als Geberelemente Hitzdrähte verwendet werden. Es ist aber auch denkbar, andere Geberelemente einzusetzen, deren Ausgangssignal sich in Abhängigkeit davon ändert, ob das Geberelement in Flüssigkeit eingetaucht oder ausgetaucht ist.

Die Erfindung wird im folgenden anhand einer Zeichnung mit zwei Figuren erläutert. Es zeigen :

Figur 1 die übereinander angeordneten Anzeigeelemente in einem Gehäuse eines Anzeigeinstruments zur Messung des Füllstands in einer Vorderansicht und

Figur 2 eine schematisch dargestellte Schaltungsanordnung, in der die Verbindung der Meßfühler mit den Anzeigeelementen dargestellt ist.

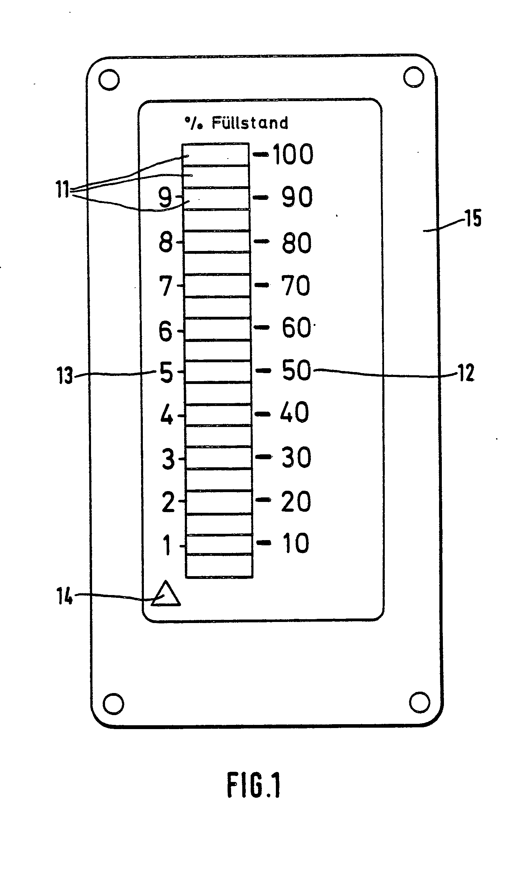

In Figur 1 ist die Sichtseite des Flüssigkeitsstands-Meßinstruments dargestellt. Die Anzeigeelemente, die beispielsweise Glühlampen oder Leuchtdioden sein können, sind selbst nicht unmittelbar sichtbar, sie befinden sich hinter Deckgläsern 11. Die Deckgläser sind wie die Anzeigeelemente übereinander angeordnet, um eine sinnfällige Anzeige des Flüssigkeitsstandes zu ergeben. Rechts neben den Deckgläsern befindet sich eine Skala 12, die einem ersten Meßbereich zugeordnet ist, während eine zweite Skala 13 für einen kleineren, gespreizten Meßbereich auf der linken Seite der Deckgläser angeordnet ist. Unterhalb der Skala 13 befindet sich eine Sichtöffnung 14 eines zusätzlichen Anzeigeelements, die farblich, beispielsweise rot, hervorgehohen sein kann. Die Deckgläser, die Skalen und die Sichtöffnung befinden sich auf der Vorderseite eines Gehäuses, von dem ein Rahmen 15 in Figur 1 sichtbar ist. In dem Gehäuse können auch die elektrischen Schaltungselemente mit Ausnahme der Widerstandselemente, die als Geberelemente dienen, angeordnet sein.

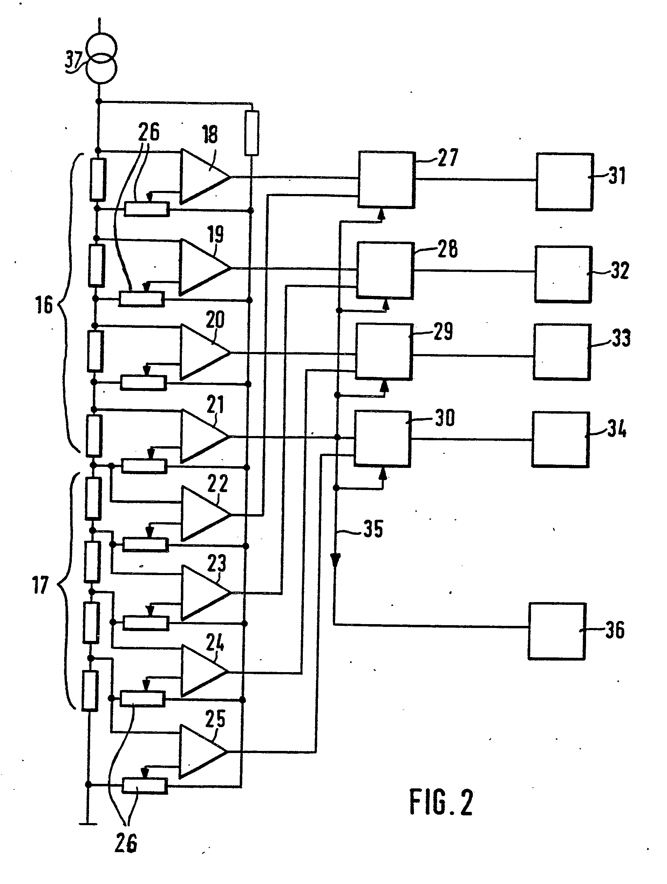

Die Verbindung dieser Schaltelemente ist in Figur 2 dargestellt. Hierin ist vereinfacht eine Reihenschaltung von vier temperaturabhängigen Widerstandselementen 16 gezeigt, zu der eine Reihenschaltung temperaturabhängiger Widerstandselemente 17 in Reihe liegt. Die Widerstandselemente 16 und 17 sind in dem Behälter angeordnet, dessen Flüssigkeitsstand zu messen ist. Die Abstände der Widerstandselemente 16 sind dabei relativ groß, entsprechend dem gesamten zu überstreichenden Meßbereich, während die Abstände der Widerstandselemente 17 verhältnismäßig klein sind, entsprechend dem Reserve-Meßbereich unterhalb eines vorgegebenen Füllstands. Die Reihenschaltung der Widerstandselemente 16 und 17 wird durch eine Konstantstromquelle 37 gespeist.

Die an jedem Widerstandselement anliegende Spannung, die davon abhängt, ob das Widerstandselement in Flüssigkeit eintaucht oder nicht eintaucht, wird durch einen Komparator gemessen, der im wesentlichen aus einem Differenzverstärker 18 bis 21 und einem Vergleichs-Spannungsgeber besteht,, der mit einem Referenzwiderstand 26 aufgebaut sein kann. Die Ausgänge der Differenzverstärker 18 bis 21 sind über Torschaltungen 27 bis 30 an Anzeigeelemente 31 bis 34 angeschlossen. In Figur 2 sind also zur Veranschaulichung weniger Anzeigeelemente dargestellt als gemäß Figur 1 vorausgesetzt werden.

Über die Torschaltungen 27 bis 30 stehen mit den Anzeigeelementen 31 bis 34 aber auch die Ausgänge der Differenzverstärker 22 bis 25 in Verbindung, die von den Widerstandselementen 17 des Reserve-Meßbereichs gespeist werden.

Zur Umschaltung der Torschaltungen sind deren Steuereingänge an einer Leitung 35 mit dem Ausgang des Differenzverstärkers 21 verbunden, der einem Mindestwert des Füllstandes zugeordnet ist. Mit der Leitung 35 steht auch ein zusätzliches Anzeigeelement 36 in Verbindung, welches die Wirksamkeit des Reserve-Meßbereichs anzeigt.

Die Schaltungsanordnung nach Figur 2 wirkt in der Weise, daß in dem ersten, größeren Meßbereich, in dem wenigstens eines der Widerstandselemente 16 in die Flüssigkeit eintaucht, die Ausgänge der Differenzverstärker 18 bis 21 zu den Anzeigeelementen 31 bis 34 durchgeschaltet sind. Auf Figur 1 übertragen, bedeutet dies, daß die rechte Skala 12 zur Darstellung des Flüssigkeitsstandes heranzuziehen ist, was durch die nicht aufleuchtende Sichtöffnung 14 angezeigt wird. Dabei erfolgt die Anzeige gemäß Figur 1 in Abstufungen von 5 %, da zwischen je zwei Anzeigeelementen, die einer 10 %igen Füllstandsdifferenz zugeordnet sind, ein weiteres Anzeigeelement angeordnet ist. Unterschreitet hingegen der Flüssigkeitsstand das Niveau des untersten temperaturabhängigen Widerstands 16 in Figur 2, so wird ein Umschaltsignal auf die Steuereingänge der Torschaltungen 27 bis 30 gegeben, die nunmehr die Ausgänge der Differenzverstärker 22 bis 25 zu den Anzeigeelementen 31 bis 34 durchschalten. Diese Anzeigeelemente zeigen nunmehr den Reservebereich in einer feineren Abstufung an, die durch die Abstände der temperaturabhängigen Widerstände 17 innerhalb des Behälters definiert ist. Dieser Abstufung entspricht in Figur 1 die linke Skala 13 mit Prozentwerten zwischen neun und eins. Die Wirksamkeit dieses Meßbereichs wird durch Aufleuchten der Sichtöffnung 14 angezeigt, hinter der sich das zusätzliche Anzeigeelement 36 befindet. Überschreitet der Flüssigkeitsstand bei einem Füllen des Tanks wieder das Niveau, das dem untersten temperaturabhängigen Widerstand 16 zugeordnet ist, so werden die Anzeigeelemente 31 bis 34 wieder mit den Ausgängen der Differenzverstärker 18 bis 21 verbunden, und das zusätzliche Anzeigeelement 36 erlischt.

## Ansprüche

1. Einrichtung zum Messen des Flüssigkeitsstandes in einem Behälter, mit einer einem ersten Füllhöhenmeßbereich zugeordneten ersten Gruppe von in unterschiedlicher Höhe angeordneten Geberelementen (16) und einer zweiten Gruppe von in unterschiedlicher Höhe angeordneten, gleichartigen Geberelementen (17), die einem zweiten Füllhöhenmeßbereich zugeordnet sind und deren Signaländerung zwischen ein- und ausgetauchtem Zustand erfaßt und zur Steuerung eines Anzeigesystems herangezogen wird, dadurch gekennzeichnet, daß der Behälter ein Kraftstoffbehälter eines Kraftfahrzeugs ist, daß der zweite Füllhöhenmeßbereich sich an das untere Ende des ersten Füllhöhenmeßbereichs anschließt, daß das Anzeigesystem aus den einzelnen Geberelementen (16) der ersten Gruppe zugeordneten Anzeigeelementen (31 bis 34) besteht, daß zur Anzeige der Signaländerung je eines Geberelements (17) der zweiten Gruppe je ein einem Geberelement (16) der ersten Gruppe zugeordnetes Anzeigeelement (31 bis 34) vorgesehen ist und daß ein Geberelement (16 ; 17) am Ort des Zusammentreffens beider Füllhöhenmeßbereiche mit einem Steuereingang einer Umschalteinrichtung (27 bis 30) zur Umschaltung der Anzeigeelemente (31 bis 34) von der einen zur anderen Gruppe Geberelemente (16 ; 17) in Verbindung steht.

2. Einrichtung nach Anspruch 1, dadurch gekennzeichnet, daß zusätzliche Anzeigeelemente (36) vorgesehen sind, die zur Anzeige des jeweils wirksamen Füllhöhenmeßbereichs mit der Umschalteinrichtung (27 bis 30) gekoppelt sind.

3. Einrichtung nach Anspruch 2, dadurch gekennzeichnet, daß die zusätzlichen Anzeigeelemente (36) aus zwei unterschiedlich farbigen Lampen bestehen, von denen je eine zur Anzeige des wirksamen Füllhöhenmeßbereichs einschaltbar ist.

4. Einrichtung nach Anspruch 1, dadurch gekennzeichnet, daß den Anzeigeelementen (31 bis 34) zwei Skalen (12, 13) zugeordnet sind, die entsprechend dem ersten bzw. dem zweiten Meßbereich geeicht sind und daß je eine Skala durch die Umschalteinrichtung (27 bis 30), je nach dem vorliegenden Füllhöhenmeßbereich, wirksam geschaltet ist.

5. Einrichtung nach einem der Ansprüche 1 bis 4, dadurch gekennzeichnet, daß die Geberelemente (17) der zweiten Gruppe in engerem Abstand zueinander als die Geberelemente (16) der ersten Gruppe in dem Behälter angeordnet sind.

## Claims

1. Apparatus for measuring the liquid level in a container, with a first group of pickup elements (16) arranged at different heights which is associated with a first filling depth measurement range, and a second group of similar pickup elements (17) arranged at different heights and associated with a second filling depth measurement range, whose signal changes between the immersed state and the emerged state are detected and used for the control of an indicating system, characterised in that the container is a fuel tank of a motor vehicle, that the second filling depth measurement range follows on from the lower end of the first filling depth measurement range, that the indicating system consists of indicating elements (31 to 34) associated with the individual pickup elements (16) of the first group, that an indicating element (31 to 34) associated with a pickup element (16) of the first group is arranged in each case for indicating signal changes of in each case a pickup element (17) of the second group, and that at the place where the two filling depth measurement ranges meet a pickup element (16 ; 17) is connected to a control input of a switch-over device (27 to 30) for switching over the indicating elements (31 to 34) from the one to the other group of pickup elements (16 ; 17).

2. Apparatus according to claim 1, characterised in that additional indicating elements (36) are provided which are coupled with the switch-over device (27 to 30) for indicating the particular filling depth measurement range which is effective at the time in question.

3. Apparatus according to claim 2, characterised in that the additional indicating elements (36) comprise two lamps of different colours, one at a time of which can be connected into circuit for indicating the then effective filling depth measurement range.

4. Apparatus according to claim 1, characterised in that the indicating elements (31 to 34) are associated with two scales (12, 13) which are graduate in accordance with the first and second measurement ranges respectively, and that one scale at a time is connected-in to be operative by means of the switch-over device (27 to 30), depending on the filling depth measurement range which then obtains.

5. Apparatus according to one of claims 1 to 4, characterised in that the pickup elements (17) of the second group are arranged with closer spacing from one another than the pickup elements (16) of the first group in the container.

**Revendications**

1. Dispositif de mesure du niveau d'un liquide dans un réservoir, comprenant un premier groupe d'organes émetteurs (16) disposés à des hauteurs différentes et associés à une première plage de mesure de la hauteur de remplissage, ainsi qu'un second groupe d'organes émetteurs (17) de même type, disposés à des hauteurs différentes, associés à une seconde plage de mesure de la hauteur de remplissage et dont la variation des signaux entre leurs états respectifs immergé et émergé est saisie et est utilisée pour commander un système d'affichage, dispositif caractérisé par le fait que le réservoir est un réservoir de carburant d'un véhicule automobile ; par le fait que la seconde plage de mesure de la hauteur de remplissage se raccorde à l'extrémité inférieure de la première plage de mesure de la hauteur de remplissage ; par le fait que le système d'affichage est constitué par les éléments d'affichage (31 à 34) associés aux organes émetteurs individuels (16) du premier groupe ; par le fait que, pour afficher la variation du signal de l'un respectif des organes émetteurs (17) du second groupe, est prévu un élément d'affichage (31 à 34) associé à l'un respectif des organes émetteurs (16) du premier groupe ; et par le fait que, à l'endroit où les deux plages de mesure de la hauteur de remplissage se rencontrent, un organe émetteur (16 ; 17) est raccordé à une entrée de commande d'un dispositif de commutation (27 à 30) en vue de commuter les éléments d'affichage (31 à 34) de l'un à l'autre des groupes d'organes émetteurs (16 ; 17).

2. Dispositif selon la revendication 1, caractérisé par le fait que sont prévus des éléments supplémentaires d'affichage (36) qui sont raccordés au dispositif de commutation (27 à 30) en vue d'afficher la plage de mesure de la hauteur de remplissage qui est en service à l'instant considéré.

3. Dispositif selon la revendication 2, caractérisé par le fait que les éléments supplémentaires d'affichage (36) consistent en deux lampes de couleur différente, dont l'une respective peut être enclenchée en vue d'afficher la plage de mesure de la hauteur de remplissage qui est en service.

4. Dispositif selon la revendication 1, caractérisé par le fait que, aux éléments d'affichage (31 à 34), sont associées deux échelles graduées (12, 13) qui sont étalonnées pour correspondre à la première ou à la seconde plage de mesurage ; et par le fait que chacune des échelles graduées est branchée, par l'intermédiaire du dispositif de commutation (27 à 30), pour être mise en service en fonction de la plage considérée de mesurage de la hauteur de remplissage.

5. Dispositif selon l'une des revendications 1 à 4, caractérisé par le fait que les organes émetteurs (17) du second groupe sont espacés mutuellement, dans le réservoir, d'une distance plus étroite que celle séparant les organes émetteurs (16) du premier groupe.

FIG.1

FIG. 2